# EUROPÄISCHE PATENTSCHRIFT

(11) **EP 1 538 472 B1**
(45) Veröffentlichungstag und Bekanntmachung des Hinweises auf die Patenterteilung: **13.09.2006**
(21) Anmeldenummer: 04028415.0
(22) Anmeldetag: 01.12.2004
(51) Int. Cl.: G02B 26/00, G03B 5/00, H04N 5/232, G02B 26/08

(54) **Bildgebungsvorrichtung mit einem beweglichen mikrooptischen Linsenfeld zur stabilisierten Abbildung eines Gegenstands auf einen Detektor**
Image forming apparatus with movable microlens array for stabilized imaging of an object to a detector
Appareil de formation d'images avec réseau de microlentilles pour l'imagerie stabilisée d'un objet sur un détecteur

(30) Priorität: 06.12.2003 DE 10357132
(43) Veröffentlichungstag der Anmeldung: 08.06.2005
(73) Patentinhaber: Diehl BGT Defence GmbH & Co.KG, 88662 Überlingen (DE)
(72) Erfinder: Tholl, Hans Dieter, Dr., 88690 Uhldingen (DE); Krogmann, Dirk, 88690 Uhldingen (DE)
(74) Vertreter: Diehl Patentabteilung

(56) Entgegenhaltungen:
- EP-A- 0 783 121
- EP-A- 1 460 456
- DE-A1- 19 742 462
- DE-A1- 19 749 799

## Beschreibung

Die Erfindung geht aus von einer Bildgebungsvorrichtung zur stabilisierten Abbildung eines Gegenstands mit einem Detektor, mit einer ersten und einer zweiten optischen Einheit und einem zwischen der ersten und der zweiten optischen Einheit angeordneten bewegbaren optischen Element.

Ein Kamerasystem mit einer hohen Auflösung ist besonders empfindlich gegen ein Verwackeln der aufgenommenen Bilder. Das Bewegen einer Abbildung eines fokussierten Gegenstands in unerwünschtem Maß über einen Detektor des Kamerasystems führt zu einer unscharfen Aufnahme des Gegenstands. Dieses Problem besteht insbesondere bei einem Kamerasystem, das in einer bewegten Maschine geführt wird, die einem Zittern ausgesetzt ist oder eine große Eigenbewegung durchführt, wie beispielsweise ein Flugzeug in Turbulenzen oder Ähnliches.

Aus der EP 0 783 121 A2 ist eine Bildgebungsvorrichtung mit einer ersten und einer zweiten optischen Einheit und einem zwischen der ersten und der zweiten optischen Einheit angeordneten, beweglich gelagerten optischen Element bekannt, durch die der Strahlengang so verändert werden kann, dass einer unerwünschten Bewegung der Abbildung über einen Detektor entgegengewirkt werden kann.

Aus der DE 197 42 462 A2 ist eine Bildgebungsvorrichtung mit einer ersten optischen Einheit, einer zweiten optischen Einheit und einem Detektor bekannt, wobei sich zwischen der ersten optischen Einheit und der zweiten optischen Einheit ein bewegliches mikrooptisches Linsenraster befindet. Die erste optische Einheit umfasst eine strahlablenkende Optik, die einzelne Gesichtsfelder in unterschiedliche Raumrichtungen ausrichtet. Durch Ansteuerung des mikrooptischen Linsen rasters wird eine separate Abbildung der einzelnen Gesichtsfelder auf den Detektor zur Erhöhung der Auflösung ermöglicht.

Ein mikrooptisches Linsenraster zum Schalten einzelner Gesichtsfelder ist der DE 197 49 799 A1 entnehmbar. Hierzu wird ein schaltbares, mikrooptisches Strahlenumlenksystem mit einem Paar von hintereinander im Strahlengang angeordneten, gegeneinander quer zur Strahlenrichtung verschiebbaren mikrooptischen Linsenrastern vorgeschlagen, wobei die Linsenraster im Wesentlichen in der Bildebene einer Zwischenabbildung anzuordnen sind.

Der Erfindung liegt die Aufgabe zugrunde, insbesondere eine Bildgebungsvorrichtung und ein Verfahren zur Stabilisierung einer Abbildung auf einen Detektor anzugeben, mit denen eine besonders genaue Stabilisierung einer Abbildung auf einen Detektor erreicht werden kann.

Die auf die Vorrichtung bezogene Aufgabe wird durch eine Bildgebungsvorrichtung gemäß Anspruch 1 gelöst.

Bei einem mikrooptischen Linsenfeld kann durch eine geringfügige Bewegung des mikrooptischen Linsenfelds, beispielsweise im Bereich von wenigen µm, eine erhebliche Ablenkung des Strahlengangs, beispielsweise von 15°, erreicht werden. Eine für eine Stabilisierung einer Abbildung auf einen Detektor notwendige Bewegung des mikrooptischen Linsenfelds kann daher klein gehalten werden, wodurch eine sehr schnelle Bewegung des mikrooptischen Linsenfelds ermöglicht wird. Hierdurch kann der Strahlengang mit sehr hoher Geschwindigkeit und sehr geringem Energiebedarf einer durch Wackeln bedingten Bewegung der Abbildung über den Detektor nachgeführt werden, wodurch eine scharfe Abbildung des fokussierten Gegenstands auf den Detektor erreicht werden kann.

Einer durch ein Wackeln verursachten Bewegung der Abbildung auf dem Detektor kann durch eine Gegenbewegung der Abbildung entgegengewirkt werden. Diese Gegenbewegung zur Stabilisierung der Abbildung wird im Folgenden als "Verschiebung" bezeichnet. Zur Erzeugung dieser Verschiebung wird das optische Element gezielt bewegt. Diese Bewegung zur Bildstabilisierung wird im Folgenden als "Auslenkung" bezeichnet.

Eine elektronische Steuereinheit, mit deren Hilfe das optische Element bewegbar ist, ermittelt zweckmäßigerweise die durch ein Wackeln verursachte Bewegung der Abbildung auf dem Detektor und veranlasst die Verschiebung zur Bildstabilisierung. Der Strahlengang durch die optischen Einheiten wird hierbei so geführt, dass eine berechnete Wackelbewegung der Abbildung über den Detektor durch die gezielte Verschiebung der Abbildung vorteilhafterweise ausgeglichen wird. Das mikrooptische Linsenfeld umfasst mehrere gleichartige und nebeneinander angeordnete Linsen mit einer Lichteintrittsfläche unterhalb 1 mm².

Das Linsenfeld kann relativ zu einem Gitter oder einer weiteren optischen Einheit beweglich ausgeführt sein. Zweckmäßigerweise ist das Linsenfeld relativ zu einem zweiten Linsenfeld beweglich, dessen Linsen jeweils einer Anzahl N von Detektorpixeln zugeordnet sind. Es kann eine Ablenkung des Strahlengangs in gewünschtem Umfang bei einer geringen Streuung des abgelenkten Lichts, und somit mit einer hohen Effizienz, erreicht werden. Die Linsen sind jeweils einer Anzahl N, also jeweils einem, zwei oder mehreren Detektorpixeln zugeordnet, wobei die Detektorpixel zweckmäßigerweise bei einem durch die beiden Linsenfelder nicht abgelenkten Strahlengang nur jeweils einer Linse des zweiten Linsenfelds zugeordnet sind.

Eine große Verschiebung, also eine große Stabilisierungsbewegung der Abbildung auf dem Detektor, bei einer relativ geringen Streuung des abgelenkten Lichts kann durch ein mit Hilfe der Steuereinheit ansteuerbares Bewegungsmittel zur definierten Bewegung des optischen Elements aus einer Zwischenbildebene heraus erreicht werden, die durch die erste optische Einheit gegeben ist. Die Bewegung des optischen Elements aus einer Zwischenbildebene heraus wird im Folgenden als "Ausrückung" bezeichnet. Je größer die Ausrückung ist, also je weiter das optische Element von der Zwischenbildebene entfernt ist, desto größer ist eine durch eine Auslenkung des mikrooptischen Linsenfelds erreichbare Verschiebung der Abbildung über den Detektor. Bei einer großen Ausrückung kann somit auch einer großen Wackelbewegung entgegengewirkt werden. Durch die Anordnung des optischen Elements außerhalb der Zwischenbildebene wird der abzubildende Gegenstand gegebenenfalls nicht mehr genau in der Zwischenbildebene abgebildet. Als Zwischenbildebene wird hierbei die Ebene verstanden, die von der ersten optischen Einheit ohne das optische Element gegeben wäre.

Zweckmäßigerweise ist das Bewegungsmittel zu einer Bewegung des optischen Elements parallel zu einer optischen Achse der ersten optischen Einheit vorgesehen. Hierdurch kann eine effektive Ausrückung aus der Zwischenbildebene heraus erreicht werden.

In einer weiteren Ausgestaltung der Erfindung ist die Steuereinheit zur Berechnung eines Arbeitspunkts des optischen Elements außerhalb der Zwischenbildebene vorgesehen. Es kann einer Wackelbewegung der Abbildung des Gegenstands über den Detektor besonders effektiv und mit geringen Streulichtverlusten entgegengewirkt werden. Mit wachsender Ausrückung des optischen Elements wachsen die Streulichtverluste, wodurch die Effizienz der Bildgebungsvorrichtung abnimmt. Ein guter Arbeitspunkt zur Ausführung der Auslenkungsbewegungen hängt daher unter anderem von dem Maß der Wackelbewegung, der Geschwindigkeit der Wackelbewegung, der Helligkeit der Abbildung und der gewünschten Bildschärfe und -intensität ab. Aus einem oder mehreren dieser Faktoren kann ein günstiger Arbeitspunkt berechnet werden.

Vorteilhafterweise ist die Steuereinheit zur Berechnung eines Arbeitspunkts aus dem Maß einer Wackelbewegung der Abbildung über den Detektor vorgesehen. Es kann bei einer hohen Effizienz, also geringen Streulichtverlusten, eine weitgehende Stabilisierung der Abbildung auf den Detektor erreicht werden. Das Maß der Wackelbewegung kann hierbei die mittlere Größe der Wackelbewegung über einen vorgegebenen Zeitraum sein. Je größer diese als Länge ermittelte mittlere Wackelbewegung ist, desto weiter ist der Arbeitspunkt zweckmäßigerweise von der Zwischenbildebene entfernt, um eine möglichst große Stabilisierung der Abbildung mit Hilfe einer Auslenkung des mikrooptischen Linsenfelds zu erreichen. Das Maß der Wackelbewegung kann auch die mittlere oder maximale Geschwindigkeit der Bewegung der Abbildung über den Detektor über einen vorgegebenen Zeitraum sein. Um eine schnelle Bewegung der Abbildung zu kompensieren, muss das mikrooptische Linsenfeld pro Zeiteinheit eine große Auslenkung vollführen. Falls nötig, kann diese Auslenkung durch eine Korrektur des Arbeitspunkts verringert werden, beispielsweise indem dessen Anordnung weiter von der Zwischenbildebene entfernt ist.

Eine schnelle Stabilisierungsbewegung des mikrooptischen Linsenfelds kann erreicht werden, wenn die Steuereinheit zur Steuerung einer Bewegung des optischen Elements in den Arbeitspunkt hinein vorgesehen ist.

Qualitativ hochwertige Bilder der Bildgebungsvorrichtung können erreicht werden, wenn die Steuereinheit dazu vorgesehen ist, eine Helligkeit der Abbildung in Qualitativ hochwertige Bilder der Bildgebungsvorrichtung können erreicht werden, wenn die Steuereinheit dazu vorgesehen ist, eine Helligkeit der Abbildung in die Berechnung des Arbeitspunkts mit einzubeziehen. Bei relativ dunklen Abbildungen hat ein hoher Streulichtverlust gravierendere Auswirkungen auf die Qualität der erfassten Abbildung als bei einer sehr hellen Abbildung. Daher ist bei einer dunklen Abbildung ein Streulichtverlust gegebenenfalls höher zu bewerten als eine nicht ganz wackelfreie Abbildung. Die Berücksichtigung der Helligkeit des Abbilds kann daher zu einer, relativ gesehen, hohen Bildqualität führen.

Die auf das Verfahren gerichtete Aufgabe wird durch ein Verfahren zur Stabilisierung einer auf einen Detektor abgebildeten Abbildung eines Gegenstands gemäß Anspruch 10 gelöst. Bei einem mikrooptischen Linsenfeld kann durch eine geringfügige Bewegung des mikrooptischen Linsenfelds, beispielsweise im Bereich von wenigen µm, eine erhebliche Ablenkung des Strahlengangs, beispielsweise von 15°, erreicht werden. Hierdurch kann der Strahlengang mit sehr hoher Geschwindigkeit und sehr geringem Energiebedarf einer durch Wackeln bedingten Bewegung der Abbildung über den Detektor nachgeführt werden.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer Bildgebungsvorrichtung mit einem beweglich gelagerten optischen Element,
- Fig. 2: ein schematisches Diagramm einer Strahlablenkung auf einem Detektor gegen eine Auslenkung der beweglich gelagerten optischen Einheit,
- Fig. 3: ein schematisches Diagramm zur Bestimmung eines Arbeitspunkts,
- Fig. 4: eine schematische Darstellung einer Bildgebungsvorrichtung mit einer Gesichtsfeldauswahl und
- Fig. 5: eine schematische Darstellung eines Bewegungsmittels zur Auslenkung einer optischen Einheit.

### Beschreibung der Ausführungsbeispiele

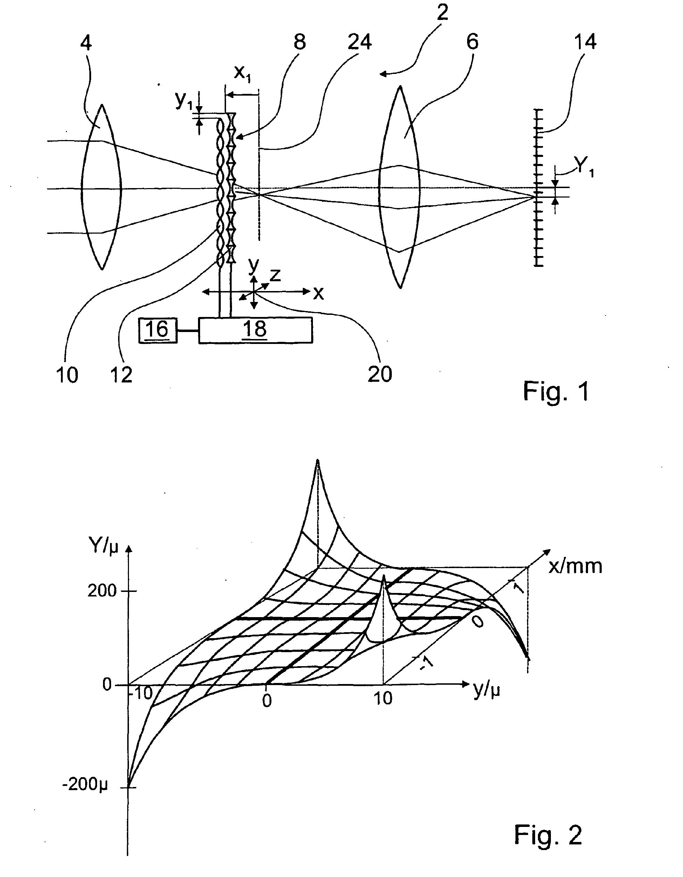

Figur 1 zeigt in einer sehr schematischen Darstellung eine Bildgebungsvorrichtung 2, die eine erste schematisiert als Linse dargestellte optische Einheit 4 und eine zweite optische Einheit 6 umfasst, die ebenfalls der Übersichtlichkeit halber nur schematisiert als Linse dargestellt ist. Zwischen der ersten optischen Einheit 4 und der zweiten optischen Einheit 6 ist eine dritte optische Einheit 8 angeordnet, die ein als erstes mikrooptisches Linsenfeld 10 ausgestaltetes optisches Element und ein zweites mikrooptisches Linsenfeld 12 aufweist. Die mikrooptischen Linsenfelder 10, 12 umfassen jeweils 256 x 256 Linsen, die im ersten Linsenfeld 10 als Sammellinsen und im zweiten Linsenfeld 12 als Zerstreuungslinsen ausgebildet sind. Jede Linse des ersten Linsenfelds 10 ist einer Linse des zweiten Linsenfelds 12 zugeordnet. Außerdem umfasst die Bildgebungsvorrichtung 2 einen Detektor 14 mit 256 x 256 Detektorzellen, deren Grenzen gegeneinander in Figur 1 anhand von Querstrichen angedeutet sind. Jede Detektorzelle ist zur Aufnahme eines Bildpixels vorgesehen. Jede Zerstreuungslinse des zweiten Linsenfelds 12 ist einer Detektorzelle zugeordnet. Die Maße der Detektorzellen sind jeweils 40 µ x 40 µ und die der Linsen der Linsenfelder 10, 12 jeweils 100 µ x 100 µ.

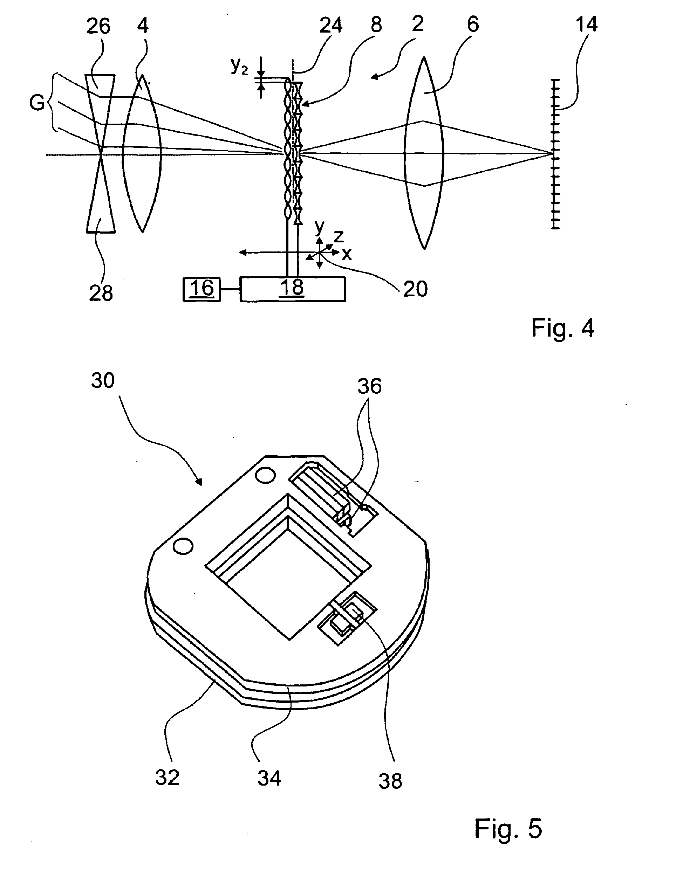

Zur Bewegung des optischen Elements 8 als Ganzes und der Linsenfelder 10, 12 gegeneinander umfasst die Bildgebungsvorrichtung 2 eine Steuereinheit 16, die ein Bewegungsmittel 18 steuert, das in Figur 5 genauer dargestellt ist. Durch das Bewegungsmittel 18 sind das erste und zweite Linsenfeld 10, 12 in allen drei senkrecht zueinander stehenden und durch die Pfeile 20 angedeuteten Raumrichtungen x, y, z beweglich gelagert.

Bei einem Wackeln oder Zittern der Bildgebungsvorrichtung 2 wird ein ruhender abzubildender Punkt im Lauf einer gewissen Zeit nicht nur auf einer der Detektorzellen des Detektors 14 abgebildet, sondern auf mehreren. Hierbei wandert die Abbildung des Punkts in einer dem Wackeln entsprechenden Maß über die Detektorzellen hin. Das Gleiche ist gültig bei einer ruhenden Bildgebungsvorrichtung 2 und einem zitternden abzubildenden Gegenstand. Um diese Wackelbewegung oder Zitterbewegung der Abbildung über den Detektor 14 zu kompensieren oder um ihr zumindest entgegenzuwirken, kann das optische Element 8 so bewegt werden, dass eine resultierende Strahlablenkung der Wackelbewegung entgegengerichtet ist.

Hierfür kann die Wackelbewegung beispielsweise der Bildgebungsvorrichtung 2 mit Hilfe einer geeigneten Erfassungsvorrichtung registriert werden, und entsprechende Steuerbefehle können von der Steuereinheit 16 an das Bewegungsmittel 18 gegeben werden. Eine solche Erfassungseinheit kann beispielsweise ein Vibrationsmessgerät oder eine Bildverarbeitungsvorrichtung sein, die eine unerwünschte Bewegung eines kontrastreichen Abbildungsabschnitts von einer Detektorzelle zu einer benachbarten Detektorzelle erfasst und entsprechende Signale an die Steuereinheit 16 übermittelt. Im Folgenden wird anhand der Darstellung in Figur 1 beispielhaft eine Strahlablenkung oder Abbildungsverschiebung zur Bildstabilisierung erläutert.

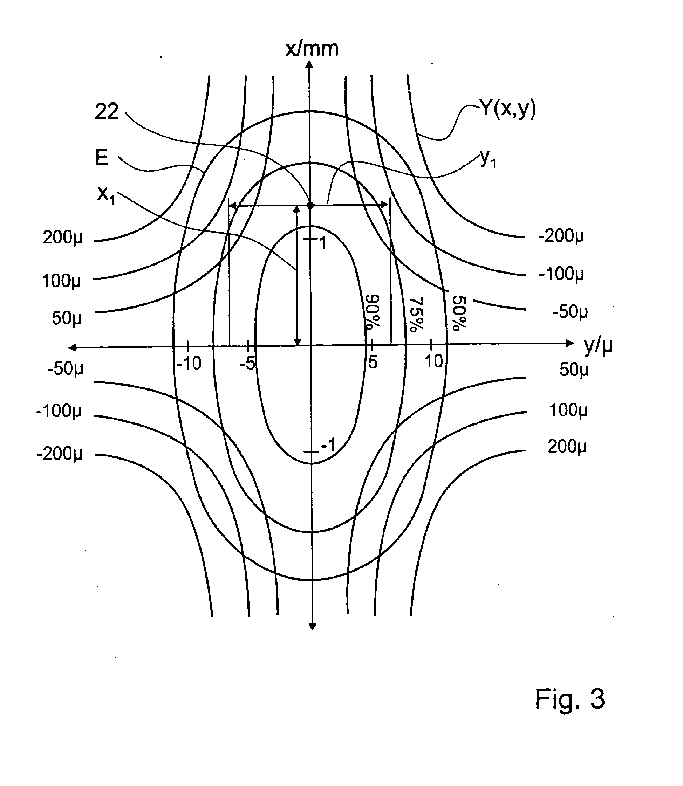

Von der nicht gezeigten Erfassungseinheit ist beispielsweise eine Wackelbewegung registriert worden, die zu einer Verschiebung eines Punktabbilds um ein Pixel nach oben geführt hat oder, je nach Erfassungseinheit, noch führen würde. Durch ein entsprechendes Signal der Steuereinheit 16 an das Bewegungsmittel 18 wird das erste Linsenfeld 10 um eine Strecke y₁ in negativer y-Richtung nach unten verfahren. Hierbei befindet sich die dritte optische Einheit 8 bereits in einem Arbeitspunkt 22 (Figur 3), der um eine Ausrückstrecke x₁ in negativer x-Richtung entfernt von der Zwischenbildebene 24 liegt. Die Ausrückung erfolgt hierbei parallel zur optischen Achse der ersten optischen Einheit 4. Durch die Auslenkung des ersten Linsenfelds 10 um die Auslenkungsstrecke y₁ nach unten wird der durch die dritte optische Einheit 8 tretende Strahlengang nach unten abgelenkt, wodurch sich die Abbildung des abzubildenden Punkts sowohl in der Zwischenbildebene 24 als auch auf dem Detektor 14 nach unten verschiebt. In Figur 1 beträgt die Verschiebung Y der Abbildung auf den Detektor 14 nach unten die Verschiebungsstrecke Y₁, die einer Kantenlänge einer Detektorzelle des Detektors 14 entspricht. Der abzubildende Punkt wird auf diese Weise um eine Detektorzelle weiter unten abgebildet, als dies ohne die Auslenkung des ersten Linsenfelds 10 der Fall wäre. Eine Wackelbewegung der Abbildung des abzubildenden Punkts auf dem Detektor 14 um eine Detektorzelle nach oben kann auf diese Weise ausgeglichen werden.

In Figur 2 ist die Verschiebung Y (x, y) einer Abbildung auf dem Detektor 14 aufgetragen. Die Verschiebung Y (x, y) ist abhängig von der Ausrückung x der dritten optischen Einheit 8 aus der Zwischenbildebene 24 und der Auslenkung y des ersten Linsenfelds 10 gegenüber dem zweiten Linsenfeld 12. Bei keiner Ausrückung x bewegt sich die Verschiebung Y bei einer Auslenkung y des ersten Linsenfelds 10 gegenüber dem zweiten Linsenfeld 12 entlang der dick dargestellten Null-Achse in x-Richtung. In dieser Null-Achse kann keine oder so gut wie keine Verschiebung Y registriert werden, da eine Verschiebung einer Abbildung auf dem Detektor 14 so klein ist, dass sie innerhalb einer Detektorzelle verbleibt. Da eine Detektorzelle ein Pixel als die kleinste auflösbare Flächeneinheit darstellt, kann eine Verschiebung innerhalb eines Pixels nicht oder, wenn es sich von einem Randbereich einer Detektorzelle zur benachbarten Detektorzelle bewegt, nur sehr schwer aufgenommen werden. Auch eine Ausrückung x der dritten optischen Einheit 8 aus der Zwischenbildebene 24 heraus bei fehlender Auslenkung y der Linsenfelder 10, 12 gegeneinander führt zu keiner Verschiebung Y.

Erst eine Kombination von Ausrückung x und Auslenkung y führt zu einer Verschiebung Y in der Art, wie sie in Figur 2 schematisch dargestellt ist. Eine große Verschiebung Y über mehrere 100 µm, und somit über viele Detektorzellen des Detektors 14, wird erreicht bei einer Ausrückung x, die wesentlich größer ist als 1 mm und einer Auslenkung y von über 10 µm. In den Figuren ist die Verschiebung Y in y-Richtung nur beispielhaft herangezogen. Eine Verschiebung Z in z-Richtung wird durch eine Auslenkung z der Linsenfelder 10, 12 gegeneinander in z-Richtung analog und in gleichem Maße erreicht wie eine Verschiebung Y.

In dem in Figur 3 gezeigten Diagramm ist die Verschiebung Y (x, y) in Form von Höhenlinien über einer zweidimensionalen Ebene aus Ausrückung x und Auslenkung y aufgetragen. Bei steigender Ausrückung x, verbunden mit steigender Auslenkung y (oder auch z), steigt der Betrag der Verschiebung Y an. In dem gleichen Diagramm, also über die gleiche Ebene, die durch die Ausrückung x und die Auslenkung y aufgespannt wird, ist auch die Effizienz E aufgetragen. Die Effizienz E gibt die Streulichtverluste wieder und ist die Lichtintensität am Detektor 14 geteilt durch die Lichtintensität bei nicht vorhandener Auslenkung y und Ausrückung x. Sowohl bei großer Auslenkung y als auch bei großer Ausrückung x nimmt die Effizienz ab.

Um eine Stabilisierung einer Abbildung auf den Detektor 14 zu bewirken, muss eine Verschiebungsstrecke Y erreicht werden. Diese wird durch eine Ausrückung x der dritten optischen Einheit 8, verbunden mit einer Auslenkung y der Linsenfelder 10, 12 gegeneinander, erreicht. Mit wachsender Auslenkung y oder wachsender Ausrückung x nimmt jedoch die Effizienz, also die auf dem Detektor messbare Lichtintensität ab, so dass ein geeigneter Arbeitspunkt 22 zu wählen ist, in den die dritte optische Einheit 8 zur Bildstabilisierung hineinbewegt wird. In Figur 3 ist der Arbeitspunkt 22 so gewählt, dass die optische Einheit 8 um die Ausrückungsstrecke x₁ von rund 1,3 mm in Richtung der ersten optischen Einheit 4 von der Zwischenbildebene 24 entfernt ist. Die Ausrückungsstrecke x₁ ergibt sich aus der Strecke zwischen der Zwischenbildebene 24 und einer sich aus den optischen Daten der Linsenfelder 10, 12 ergebenden Zentralebene zwischen den Linsenfeldern 10, 12.

Einmal in den Arbeitspunkt 22 ausgerückt, kann die dritte optische Einheit 8 als Ganzes ruhen, wobei durch die Auslenkung y eines der Linsenfelder 10, 12 gegenüber dem anderen die Verschiebung Y einer Abbildung auf dem Detektor 14 erreicht wird. Aus Figur 3 ist zu ersehen, dass die maximale Auslenkungsstrecke y₁ etwa 7 µm beträgt. Mit dieser maximalen Auslenkungsstrecke y₁ kann eine Verschiebungsstrecke Y₁ von etwa ± 80 µm erreicht werden, was der Größe von zwei Detektorzellen entspricht. Es kann somit einem Verwackeln der Abbildungen über ± 2. Detektorzellen, also über insgesamt 4 Detektorzellen, wirksam entgegengewirkt werden. Hierbei wird eine Effizienz E von mindestens etwa 70% nicht unterschritten. Es kann also eine hohe Abbildungsstabilisierung bei einer gleichzeitig hohen Effizienz E erreicht werden.

Ist das durch ein Wackeln hervorgerufene Maß einer unerwünschten Bewegung einer Abbildung auf den Detektor 14 gering und gegebenenfalls langsam, so kann ein Arbeitspunkt 22 gewählt werden, der im Bereich von 1 mm Ausrückung x liegt. Bei einer Ausrückung x von beispielsweise 1,0 mm kann, verbunden mit der Auslenkungsstrecke y₁, wie in Figur 3 eingezeichnet, eine Verschiebung Y über etwas mehr als eine Detektorzelle erreicht werden, wobei die Effizienz 80% nicht unterschreitet. Die Berechnung eines möglichst effizienten Arbeitspunkts 22 wird durch die Steuereinheit 16 vorgenommen unter Hinzuziehung von verfügbaren Informationen über das Maß der Wackelbewegung und eine Helligkeit der Abbildung auf den Detektor 14. Nach einer Berechnung des Arbeitspunkts 22 gibt die Steuereinheit 16 entsprechende Signale an das Bewegungsmittel 18 zur Bewegung der dritten optischen Einheit 8 in den Arbeitspunkt 22.

Figur 4 zeigt einen weiteren Aspekt der Erfindung, nämlich die Möglichkeit einer Verbindung der oben beschriebenen Abbildungsstabilisierung mit einer Gesichtsfeldauswahl. Vor der optischen Einheit 4 sind hierfür mehrere Prismen angeordnet, von denen zwei Prismen 26, 28 schematisch dargestellt sind. Bei einer entsprechenden diskreten Auslenkungsstrecke y₂ der Linsenfelder 10, 12 gegeneinander wird der Strahlengang, wie in Figur 4 gezeigt, so abgelenkt, dass ein erstes Gesichtsfeld G auf den Detektor 14 abgebildet wird. Bei einer Auslenkungsstrecke mit negativem y₂, also einer Auslenkung des ersten Linsenfelds 10 gegenüber dem zweiten Linsenfeld 12 nach unten verschoben, würde ein durch das Prisma 28 ausgewähltes Gesichtsfeld auf den Detektor 14 abgebildet werden. Durch eine entsprechende Auslenkungsstrecke ± z₂ können beispielsweise zwei weitere, nicht gezeigte Prismen, und damit zwei weitere Gesichtsfelder, zur Abbildung auf den Detektor 14 ausgewählt werden. Je nach Gesichtsfeldwahl und einer gewünschten Abbildungsstabilisierung können die Dimensionen der optischen Einheiten 4, 6, 8 entsprechend gewählt werden. Diese optischen Einheiten 4, 6, 8 sind in den Figuren 1 und 4 nicht maßstabsgetreu dargestellt.

Zur Erreichung einer Abbildungsstabilisierung bei einem wie in Figur 4 gewählten Gesichtsfeld G wird die Auslenkungsstrecke y₁ zur Bildstabilisierung der Auslenkungsstrecke y₂ zur Gesichtsfeldwahl überlagert. Auf diese Weise kann ein sehr großes Blickfeld, das sich aus mehreren Gesichtsfeldern zusammensetzt, mit einer hohen Auflösung und einer hohen Bildstabilität auf den Detektor 14 abgebildet werden.

Eine schematische Darstellung einer Stelleinheit oder eines Bewegungsmittels 30 zur Bewegung der dritten optischen Einheit 8 ist in Figur 5 gezeigt. Das Bewegungsmittel 30 umfasst zwei Rahmen 32, 34, von denen der Rahmen 32 das erste Linsenfeld 10 und der Rahmen 34 das zweite Linsenfeld 12 umschließt. Die Linsenfelder 10, 12 sind der Übersichtlichkeit halber in Figur 5 nicht dargestellt. Die beiden Linsenfelder 10, 12 sind innerhalb der Rahmen 32, 34 beweglich gelagert, so dass sie durch jeweils ein Piezo-Stellelement 36 innerhalb der Rahmen 32, 34 hin- und herbewegt werden können. Jedes der Piezo-Stellelemente 36 weist Stapel von Piezo-Elementen auf, die sich an den Rahmen 32, 34 abstützen. Der Hub der Piezo-Elemente wird durch nicht dargestellte Übersetzungs- und Umlenkhebelgetriebe auf die Linsenfelder 10, 12 übertragen. Der Hub der Stapel der Piezo-Elemente beträgt dabei nur wenige µm. Die Auslenkung y der Linsenfelder 10 relativ zu den Rahmen 32, 34 wird mittels eines kapazitiven Weggebers 38 gemessen. Der Weggeber 38 und die Piezo-Stellelemente 36 bilden Messfühler und Stellglied eines nicht dargestellten Regelkreises, mittels dessen der Stellweg der Linsenfelder 10, 12 auf einen vorgegebenen Wert regelbar ist.

Während eine Auslenkung in y-Richtung und z-Richtung durch die Piezo-Stellelemente 36 erreicht wird, wird eine Ausrückung x der Linsenfelder 10, 12 durch einen nicht gezeigten, fein justierbaren elektrischen Linearmotor im Bewegungsmittel 18 erreicht. Dieser elektrische Linearmotor bewegt die beiden Rahmen 32, 34 innerhalb des Bewegungsmittels 18 in x-Richtung.

### Bezugszeichen

- 2: Bildgebungsvorrichtung
- 4: optische Einheit
- 6: optische Einheit
- 8: optische Einheit
- 10: Linsenfeld
- 12: Linsenfeld
- 14: Detektor
- 16: Steuereinheit
- 18: Bewegungsmittel
- 20: Pfeil
- 22: Arbeitspunkt
- 24: Zwischenbildebene
- 26: Prisma
- 28: Prisma
- 30: Bewegungsmittel
- 32: Rahmen
- 34: Rahmen
- 36: Piezo-Stellelement
- 38: Weggeber
- x: Ausrückung
- y: Auslenkung
- z: Auslenkung
- Y: Verschiebung
- E: Effizienz
- G: Gesichtsfeld

## Patentansprüche

1. Bildgebungsvorrichtung (2) zur stabilisierten Abbildung eines Gegenstands mit einem Detektor (14) zur Aufnahme eines Abbildung, mit einer ersten optischen Einheit (4) und einer zweiten optischen Einheit (6) und einem zwischen den optischen Einheiten (4, 6) angeordneten bewegbaren optischen Element, wobei
das optische Element ein mikrooptisches Linsenfeld (10) ist, **dadurch gekennzeichnet, dass** die Bildgebungs vorrichtung eine elektronische Steuereinheit (16) und eine Erfassungsvorrichtung enthält, wobei die Steuereinheit (16) die zu einer durch ein Wackeln verursachten und von der Erfassungsvorrichtung registrierten Bewegung der Abbildung eine Gegenbewegung der Abbildung durch eine gezielte Bewegung des mikrooptischen Linsenfelds (10) veranlasst.

2. Bildgebungsvorrichtung (2) nach Anspruch 1,
wobei
die elektronische Steuereinheit (16) dafür ausgebildet ist, die durch ein Wackeln verursachte Bewegung der Abbildung auf dem Detektor (14) zu ermitteln.

3. Bildgebungsvorrichtung (2) nach Anspruch 1 oder 2,
wobei
das Linsenfeld (10) relativ zu einem zweiten Linsenfeld (12) beweglich ist, dessen Linsen jeweils einer Anzahl N von Detektorpixeln zugeordnet sind.

4. Bildgebungsvorrichtung (2) nach einem der vorhergehenden Ansprüche, wobei ein mit Hilfe der Steuereinheit (16) ansteuerbares Bewegungsmittel (18) zur definierten Bewegung des optischen Elements aus einer Zwischenbildebene (24) heraus, die **durch** die erste optische Einheit (4) gegeben ist.

5. Bildgebungsvorrichtung (2) nach einem der vorhergehenden Ansprüche,
wobei
das Bewegungsmittel (18) zu einer Bewegung des optischen Elements parallel zu einer optischen Achse der ersten optischen Einheit (4) vorgesehen ist.

6. Bildgebungsvorrichtung (2) nach einem der vorhergehenden Ansprüche,
wobei
die Steuereinheit (16) zur Berechnung eines Arbeitspunkts (22) des optischen Elements außerhalb der Zwischenbildebene (24) vorgesehen ist.

7. Bildgebungsvorrichtung (2) nach Anspruch 6,
wobei
die Steuereinheit (16) zur Berechnung eines Arbeitspunkts (22) aus dem Maß einer Wackelbewegung der Abbildung über den Detektor (14) vorgesehen ist.

8. Bildgebungsvorrichtung (2) nach Anspruch 6 oder 7,
wobei
die Steuereinheit (16) zur Steuerung einer Bewegung des optischen Elements in den Arbeitspunkt (22) hinein vorgesehen ist.

9. Bildgebungsvorrichtung (2) nach einem der vorhergehenden Ansprüche,
wobei
die Steuereinheit (16) dazu vorgesehen ist, eine Helligkeit der Abbildung in die Berechnung des Arbeitspunkts (22) mit einzubeziehen.

10. Verfahren zur Stabilisierung einer Abbildung eines Gegenstands auf einen Detektor (14), bei dem ein in einem Abbildungsstrahlengang zwischen einer ersten optischen Einheit (4) und einer zweiten optischen Einheit (6) angeordnetes mikrooptisches Linsenfeld (10) in eine erste Stabilisierungsbewegung zur Stabilisierung der Abbildung versetzt wird,
wobei
zu einer durch ein Wackeln verursachten und von einer Erfassungseinheit registrierten Bewegung der Abbildung eine Gegenbewegung der Abbildung durch eine gezielte Bewegung des mikrooptischen Linsenfelds (10) von einer elektronischen Steuereinheit (16) veraulasst wird.

11. Verfahren nach Anspruch 10,
wobei
die durch ein Wackeln verursachte Bewegung der Abbildung auf dem Detektor (14) erfasst wird.

## Claims

1. Imaging device (2) for the stabilized imaging of an object with a detector (14) for recording an imaging, with a first optical unit (4) and a second optical unit (6) and a moveable optical element that is arranged between the optical units (4, 6), in which the optical element is a micro-optical lens array (10),
**characterized in that** the imaging device contains an electronic control unit (16) and a detection device, the control unit (16), for a movement of the imaging that is caused by wobbling and is registered by the detection device, instigating a countermovement of the imaging by a targeted movement of the micro-optical lens array (10).

2. Imaging device (2) according to Claim 1,
in which
the electronic control unit (16) is designed to determine the movement of the imaging on the detector (14) caused by wobbling.

3. Imaging device (2) according to Claim 1 or 2,
in which
the lens array (10) is moveable relative to a second lens array (12), the lenses of which are in each case assigned to a number N of detector pixels.

4. Imaging device (2) according to one of the preceding claims,
in which a movement means (18), which can be driven with the aid of the control unit (16), for the defined movement of the optical element out of an intermediate image plane (24) provided by the first optical unit (4).

5. Imaging device (2) according to one of the preceding claims,
in which
the movement means (18) is provided for a movement of the optical element parallel to an optical axis of the first optical unit (4).

6. Imaging device (2) according to one of the preceding claims,
in which
the control unit (16) is provided for calculating an operating point (22) of the optical element outside the intermediate image plane (24).

7. Imaging device (2) according to Claim 6,
in which
the control unit (16) is provided for calculating an operating point (22) from the extent of a wobbling movement of the imaging over the detector (14).

8. Imaging device (2) according to Claim 6 or 7,
in which
the control unit (16) is provided for controlling movement of the optical element into the operating point (22).

9. Imaging device (2) according to one of the preceding claims,
in which
the control unit (16) is provided for including a brightness of the imaging in the calculation of the operating point (22).

10. Method for stabilizing an imaging of an object onto a detector (14), in which a micro-optical lens array (10) arranged in an imaging beam path between a first optical unit (4) and a second optical unit (6) is caused to effect a first stabilization movement for stabilizing the imaging, in which, for a movement of the imaging that is caused by wobbling and is registered by a detection unit, a countermovement of the imaging by a targeted movement of the micro-optical lens array (10) is instigated by an electronic control unit (16).

11. Method according to Claim 10,
in which
the movement of the imaging on the detector (14) caused by wobbling is detected.

## Revendications

1. Dispositif de formation d'image (2) pour la reproduction stabilisée d'un objet avec un détecteur (14) pour la photographie d'une image, comprenant une première unité (4) optique et une deuxième unité (6) optique et un élément optique déplaçable, disposé entre les unités (4, 6) optiques, l'élément optique étant un réseau de microlentilles (10), **caractérisé en ce que** le dispositif de formation d'image contient une unité de commande électronique (16) et un dispositif de détection, l'unité de commande (16) ordonnant un contre-mouvement de l'image par rapport à un mouvement de l'image provoqué par un vacillement et enregistré par le dispositif de détection, par un déplacement ciblé du réseau de microlentilles (10).

2. Dispositif de formation d'image (2) selon la revendication 1,
l'unité de commande (16) électronique étant conçue pour déterminer le mouvement, provoqué par un vacillement, de l'image sur le détecteur (14).

3. Dispositif de formation d'image (2) selon la revendication 1 ou 2,
le réseau de lentilles (10) étant mobile par rapport à un deuxième réseau de lentilles (12), dont les lentilles sont attribuées respectivement à un nombre N de pixels de détecteur.

4. Dispositif de formation d'image (2) selon l'une quelconque des revendications précédentes
un moyen de déplacement (18) pouvant être activé à l'aide de l'unité de commande (16) étant présent pour le déplacement défini de l'élément optique à partir d'un plan d'image intermédiaire (24), qui est donné par la première unité (4) optique.

5. Dispositif de formation d'image (2) selon l'une quelconque des revendications précédentes,
un moyen de déplacement (18) étant prévu pour un mouvement de l'élément optique parallèlement à un axe optique de la première unité (4) optique.

6. Dispositif de formation d'image (2) selon l'une quelconque des revendications précédentes,
l'unité de commande (16) étant prévue pour le calcul d'un point de travail (22) de l'élément optique à l'extérieur du plan d'image intermédiaire (24).

7. Dispositif de formation d'image (2) selon la revendication 6,
l'unité de commande (16) étant prévue pour le calcul d'un point de travail (22) à partir de la cote d'un mouvement de bougé de l'image au moyen du détecteur (14).

8. Dispositif de formation d'image (2) selon la revendication 6 ou 7,
l'unité de commande (16) étant prévue pour la commande d'un mouvement de l'élément optique à l'intérieur du point de travail (22).

9. Dispositif de formation d'image (2) selon l'une quelconque des revendications précédentes,
l'unité de commande (16) étant prévue pour intégrer une luminosité de l'image dans le calcul du point de travail (22).

10. Procédé pour la stabilisation d'une image d'un objet sur un détecteur (14), dans lequel un réseau de microlentilles (10) disposé dans une trajectoire de faisceau de reproduction entre une première unité (4) optique et une seconde unité (6) est amené dans un premier mouvement de stabilisation pour la stabilisation de l'image,
un contre-mouvement de l'image, par rapport à un mouvement de l'image provoqué par un bougé et enregistré par une unité de détection, par un mouvement ciblé du réseau de microlentilles (10) étant ordonné par une unité de commande (16) électronique.

11. Procédé selon la revendication 10,
le mouvement de l'image, provoqué par un bougé étant saisi sur le détecteur (14).
